# EUROPEAN PATENT SPECIFICATION

(11) **EP 1 267 065 B1**
(45) Date of publication and mention of the grant of the patent: **22.12.2004**
(21) Application number: 02012943.3
(22) Date of filing: 11.06.2002
(51) Int. Cl.: F02M 21/02, F16K 31/06

(54) **Internal combustion engine fuel gas feed device**
Gaszuführvorrichtung für Brennkraftmaschine
Dispositif d'alimentation de gaz pour moteur à combustion interne

(30) Priority: 12.06.2001 IT TO20010566
(43) Date of publication of application: 18.12.2002
(73) Proprietor: MATRIX S.p.A., I-10015 Ivrea (IT)
(72) Inventor: Glauda, Roberto, 10010 Albiano d'Ivrea (IT); Menaldo, Massimo, 13884 Torrazzo (IT); Guadagnini, Paolo, 00060 Sacrofano (IT)
(74) Representative: Jorio, Paolo

(56) References cited:
- EP-A- 0 400 504
- DE-A- 4 432 588
- DE-A- 19 600 816
- DE-U- 7 324 333
- US-A- 4 534 381
- US-A- 5 139 226
- US-A- 5 653 422
- US-A- 5 762 097
- US-A- 5 775 281

## Description

The present invention relates to an internal combustion engine fuel gas feed device.

Owing to the atmospheric pollution and other health hazards produced by internal combustion engines fueled with liquid fuel derived from petroleum, and also the cost of such fuel, systems have recently been designed for fueling engines with fuel gas, e.g. LPG or methane. To supply the engine, the gas in the tank flows through a pressure reducer, which, in the case of LPG, vaporizes the gas; and the vaporized and/or reduced-pressure gas is mixed with air and fed to the engine cylinders.

In internal combustion engine gas feed systems, the reducer-vaporizer unit is normally connected to the intake manifold by a feed conduit and an air-fuel mixing device. Such feed systems have the drawback of failing to meter the fuel to a correct, constant stoichiometric ratio, so that the exhaust gas often contains quantities of contaminating substances, and engine performance is invariably poor.

Various fuel gas feed systems have been proposed, in which the gas from the reducer-vaporizer unit is fed to a distributor-metering unit connected to the intake conduits of the cylinders by respective flexible conduits, so that the systems can be retrofitted easily. In one known system, the fuel gas is fed to the intake conduit of each engine cylinder by a multiple solenoid valve common to all the cylinders, and which feeds the metered gas to a manifold communicating with the intake conduits of all the cylinders. The solenoid valve comprises a group of shutters, each carried by an electromagnet armature. In another known system, the fuel gas is fed to individual cylinders by respective separate solenoid valves.

In both cases, the armature of each electromagnet is defined by an oblong plate which rotates about a line of contact with an edge of a fixed member; and contact is assured by a bar of elastic material acting on one end of the armature plate, which, however, is held in position closing the solenoid valve by a corresponding spring acting on the shutter.

Solenoid valves of this sort have various drawbacks. In particular, the position of the line of contact on the armature may vary due to component machining and assembly tolerances; spring closure makes the solenoid valve fairly slow-operating; and the solenoid valve itself is relatively expensive to produce and extremely complicated to assemble and maintain.

In another known solenoid valve for compressed-air Control circuits, the armature is defined by an oblong plate, has no return spring, and is held in the closed position substantially by air pressure in a chamber upstream from the compressed-air outlet conduit. This type of solenoid valve is unsuitable for feeding fuel gas to an internal combustion engine, owing to the very small difference, normally less than 1 bar, in the fuel gas pressure between the inlet conduit of the solenoid valve and the outlet conduit.

From document US 5 653 422 A, it is also known a solenoid valve having a central inlet channel and two outmost channels, these latter projecting into the interior of a chamber with corresponding nozzles. The armature is provided with a blunt edge on the side facing the solenoid, with which it is pivotally supported on the separating surface. The armature has two recesses provided with relevant seals to alternately close the two nozzles. The armature is urged to normally close one of the nozzles by a spiral spring encompassing this nozzle and engaged in the relevant recess.

It is an object of the present invention to provide an internal combustion engine fuel gas feed device, which is highly reliable, is cheap to produce, and eliminates the aforementioned drawbacks of the known devices.

According to the present invention, there is provided a fuel gas feed device for an internal combustion engine, comprising at least one solenoid valve controlled to feed gas to a corresponding cylinder of the engine; said solenoid valve comprising an inlet conduit and at least one outlet conduit for said fuel gas; a corresponding shutter carried by an armature being activated by a corresponding electromagnet to connect said inlet conduit to said outlet conduit; said armature being defined by an oblong plate rotating about an edge located between a first surface and an inclined portion of said plate, and contacting a flat surface of said fixed member; and an elastic member acting on said plate with a predetermined elastic force sufficient to normally keep said shutter in a closed position closing said outlet conduit; characterized in that said shutter projects from a second flat surface of said plate, opposite said first surface; said elastic member acting on said second surface at said inclined portion along a line parallel to said edge as to form a predetermined lever arm.

A preferred, non-limiting embodiment of the invention will be described by way of example with reference to the accompanying drawings, in which:
Figure 1 shows a part of an internal combustion engine feed system comprising a fuel device in accordance with the invention;
Figure 2 shows a section of a solenoid valve of the Figure 1 feed device;
Figure 3 shows a partial section along the line III-III in Figure 2;
Figure 4 shows a larger-scale portion of the Figure 2 solenoid valve;
Figure 5 shows a schematic cross section of a variation of the solenoid valve of the Figure 1 feed device;
Figure 6 shows a partial section along line VI-VI in Figure 5;
Figure 7 shows a variation of a portion of Figure 4.

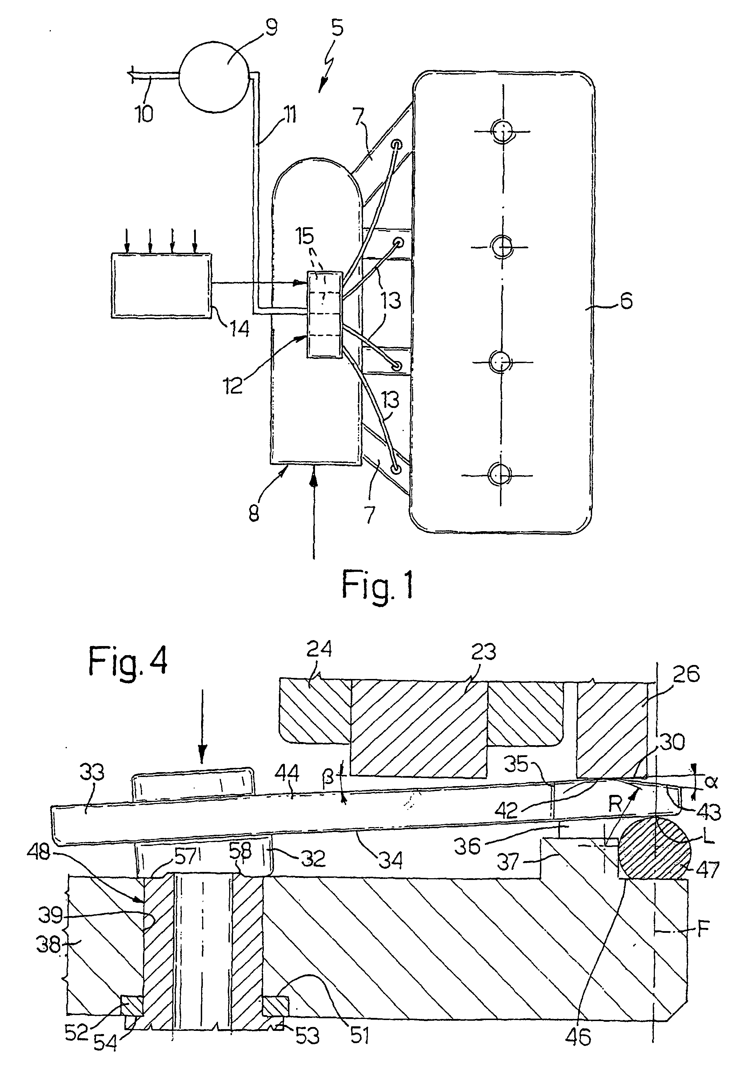

Number 5 in Figure 1 indicates as a whole a system for feeding fuel gas, e.g. LPG or methane, to an internal combustion, e.g. Otto cycle, engine 6, which may be a four-cylinder type, each cylinder supplied with air and fuel by a corresponding intake conduit 7. Conduits 7 are supplied with air by an air intake 8 via a normal air filter; and gas feed system 5 comprises a normal gas pressure reducer 9 connected by a conduit 10 to the liquid-gas tank (not shown).

Pressure reducer 9 is also connected by a supply conduit 11 to a fuel gas feed device indicated as a whole by 12, and which feeds fuel gas to the cylinders of engine 6 by means, for example, of four flexible connecting conduits 13, each connected in known manner to a corresponding intake conduit 7. Feed device 12 is timed and controlled sequentially by an electronic central control unit 14 as a function of signals corresponding to significant operating values of engine 6, such as engine speed and torque, accelerator position, external temperature, and engine cooling water temperature.

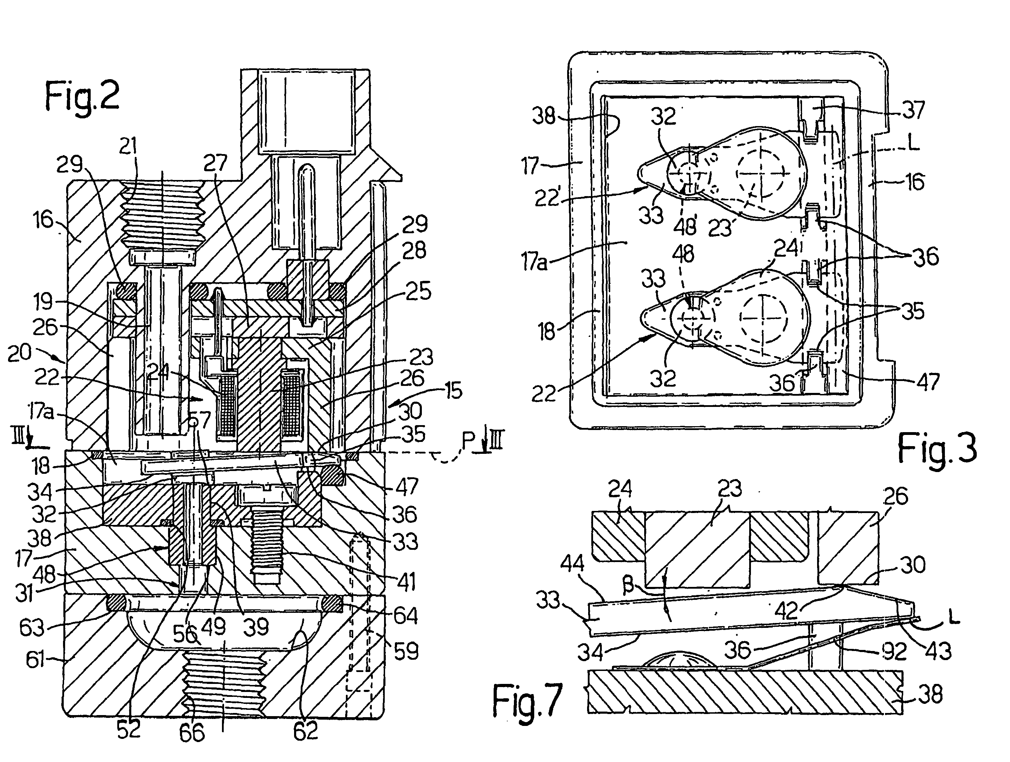

For each cylinder of engine 6, feed device 12 comprises a solenoid valve 15 (Figure 2) enclosed in a casing 20 defined by two hollow bodies 16, 17 connected in known manner to each other along a plane P with the interposition of a gastight seal 18. Hollow body 16 has an inlet conduit 19 having a threaded portion 21 connected by a fitting (not shown) to the supply conduit 11 of reducer 9 (Figure 1).

Hollow body 16 houses at least one control electromagnet 22, which comprises a core 23 of magnetic material and an electric coil 24. Core 23 is fixed to an end wall 25 of a sleeve 26 made of magnetic material and fixed inside hollow body 16 in known manner with the interposition of a spacer plate 27, a plate 28 for supporting the electric connections for coil 24, and two seals 29. The thickness of spacer plate 27 is such that the surface of an end edge 30 of sleeve 26 lies in plane P.

Hollow body 17 forms with hollow body 16 a chamber 17a, which communicates with inlet conduit 19 and with an outlet conduit comprising a hole 31 formed in hollow body 17 and described in detail later on. Chamber 17a houses a shutter 32 for the outlet conduit, which is in the form of a disk of elastomeric material, and is carried in known manner by an armature of electromagnet 22 defined by an oblong plate 33 (Figure 3). More specifically, plate 33 has a flat surface 34, from which shutter 32 projects towards hole 31 of the outlet conduit; plate 33 has two recesses 35 for engaging two appendixes 36 carried by a rib 37 of an armature guide plate 38; and guide plate 38 has a hole 39 alignable with hole 31 in hollow body 17, and is fixed inside hollow body 17 by means of screws 41.

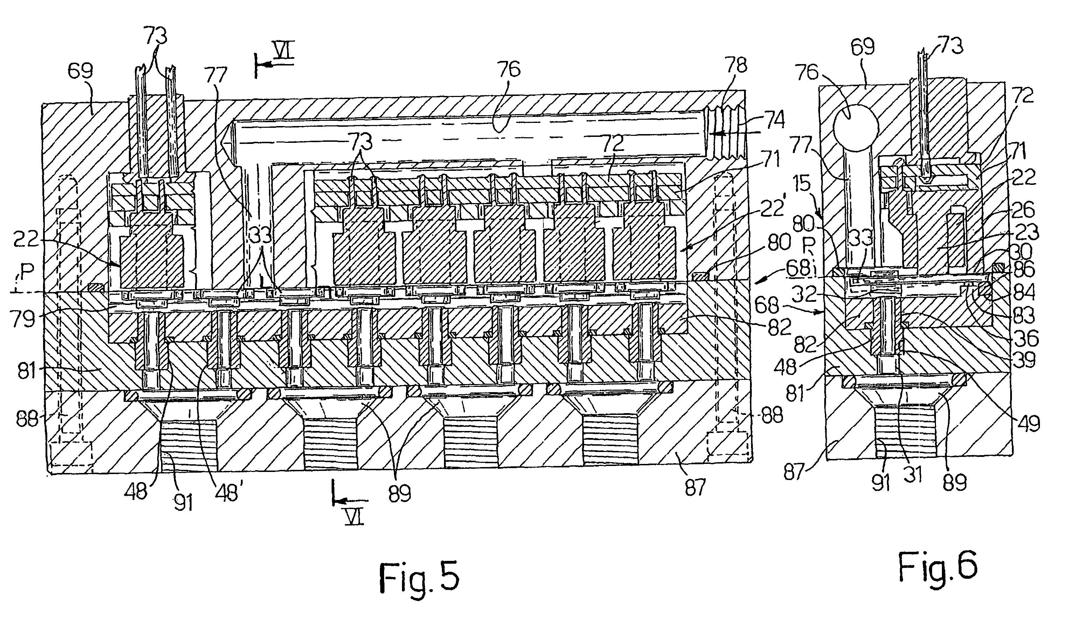

According to the invention, plate 33 rotates about a line of contact with edge 30 of sleeve 26. The line of contact is defined by an edge 42 (Figure 4) of plate 33 contacting the flat surface of edge 30 of sleeve 26; edge 42 is defined by an inclined portion 43, and by a flat surface 44 of plate 33 opposite surface 34; inclined portion 43 preferably forms an angle α of less than 20° with surface 44; and a seat 46 between rib 37 of plate 38 and a lateral wall of hollow body 17 (see also Figure 2) houses a substantially circular-section elastic bar 47 made of elastomeric material, e.g. rubber, and which acts along a line L parallel to edge 42, and is of such a diameter as to produce an elastic force F sufficient to normally keep shutter 32 in the closed position closing the outlet conduit.

Advantageously, edge 42 is so located along surface 44 of plate 33 that the lever arm of force F of bar 47 is at least a tenth of the lever arm of the center of shutter 32. To prevent rapid deterioration of the surface of edge 30, edge 42 is rounded with a radius R at least equal to the lever arm of force F of elastic bar 47. Also, to improve the action of electromagnet 22 on plate 33, the surfaces of edge 30 and core 23 are best so located that, when shutter 32 is in the closed position, the angle β between surface 44 of plate 33 and the surface of edge 30 substantially equals the angle between inclined portion 43 and the surface of edge 30.

According to a further aspect of the invention, the outlet conduit of solenoid valve 15 also comprises a calibrated nozzle 48 fitted removably inside a seat defined by hole 39 in plate 38, and by a wider-diameter portion 49 of hole 31. More specifically, the surface of plate 38 facing the inner surface of hollow body 17 has an annular groove 51 formed about hole 39 and housing an annular gastight seal 52. Nozzle 48 is defined by a sleeve 53, the outer surface of which has a shoulder 54 for engaging seal 52.

Sleeve 53 is defined by two end edges 56 and 57, and is so sized that, when edge 56 is positioned at the bottom of portion 49 of hole 31, shoulder 54 is flush with the inner surface of hollow body 17, and edge 57 is flush with, or projects slightly from, the surface of plate 38 opposite the surface contacting hollow body 17. Edge 57 has a rib 58, which is engaged by shutter 32 - which is deformed by the action of elastic bar 47 - to ensure gastight sealing when solenoid valve 15 is closed.

To assemble nozzle 48 inside hollow body 17, before assembling plate 38, nozzle 48 is inserted inside portion 49 of hole 31; seal 52 is placed on shoulder 54; plate 38 is inserted inside hollow body 17 so that nozzle 48 is inserted inside hole 39 in plate 38; and plate 38 is fixed inside hollow body 17 by tightening screws 41. Obviously, to replace a worn or damaged nozzle 48, screws 41 are loosened to remove plate 38 from hollow body 17, and nozzle 48 from portion 49 of hole 31.

According to a further aspect of the invention, solenoid valve 15 supplying each cylinder of engine 6 comprises two distinct electromagnets 22, 22' (Figure 3), which are substantially identical and housed in the same casing 20 defined by hollow bodies 16 and 17. Electromagnets 22, 22' share the same chamber 17a and receive gas along the same inlet conduit in hollow body 16, but are associated with two distinct outlet conduits, comprising two pairs of holes 31, 39 in hollow body 17 and plate 38, and two corresponding calibrated nozzles 48 and 48'.

A plate 61 is fixed by screws 59 to the outside of hollow body 17, and has a manifold 62 for receiving the gas from the two outlet holes 31 of solenoid valve 15. Manifold 62 has a recess 63 for housing a gastight seal 64; and plate 61 also has a threaded hole 66 in which to screw an end fitting of connecting conduit 13 (Figure 1) connected to intake conduit 7 of the corresponding cylinder of engine 6. The fitting screwed inside threaded hole 66 may be calibrated to adapt the flow of solenoid valves 15 to the type of engine 6 involved.

Advantageously, calibrated nozzles 48 and 48' may be similar externally, but with different inside diameters for different gas flows. The two holes 31 may have equal diameters at least equal to the larger inside diameter of nozzles 48 and 48'. More specifically, the inside diameter of nozzle 48' may be such as to obtain a gas flow section which is twice that of calibrated nozzle 48. Central control unit 14 activates solenoid valves 15 selectively as a function of the operating conditions of engine 6, and generates modulated-width control pulses to effect pulse-width-modulation (PWM) control of each electromagnet 22, 22'. Central control unit 14 therefore opens one or both shutters 32 of each solenoid valve 15 for a variable length of time within the intake phase of the corresponding cylinder of engine 6, so that operation of engine 6 is extremely flexible.

To supply engine 6, each cylinder may be provided with a corresponding solenoid valve 15 having one electromagnet 22 or two electromagnets 22, 22'. For all the engine cylinders, provision may be made for one feed device 12 incorporating a number of solenoid valves 15 equal to the number, or to a submultiple of the number, of cylinders of engine 6.

Figures 5 and 6 show, schematically, a feed device 12 for a four-cylinder engine 6, in which the four solenoid valves 15, each comprising two electromagnets 22, 22', are integrated in a single body. Electromagnets 22, 22' are substantially similar to those in Figures 2-4, and are therefore not described further. More specifically, in this feed device, electromagnets 22, 22' are all aligned in one row and housed in a single casing 68 comprising a hollow body 69 housing all eight electromagnets 22, 22', which are mounted with the interposition of a common spacer plate 71, and a plate 72 on which are located the electric connections of the corresponding pins 73.

Hollow body 69 has a conduit 74 common to all the solenoid valves 15, and which comprises a portion 76 parallel to plates 71 and 72; and one or more portions 77, each perpendicular to plates 71 and 72. Portion 76 has one end 78 connectable to supply conduit 11 (Figure 1) of pressure reducer 9; and portion 77 communicates with a chamber 79 common to all of solenoid valves 15.

Casing 68 also comprises a second hollow body 81 connected to hollow body 69 along a plane P, with the interposition of a common seal 80. By means of screws (not shown), hollow body 81 is fitted inside with a plate 82 for guiding plates 33 of the armatures of electromagnets 22; plate 82 has a number of pairs of appendixes 36 engaged by recesses 35 of plates 33; hollow body 81 and plate 82 support the pairs of nozzles 48, 48' of the outlet conduits of individual solenoid valves 15, 15' in the same way as feed device 12 in Figures 2 and 3; and appendixes 36 are carried by a single rib 83 defining a seat 84 for a single elastic bar 86 common to all of plates 33.

Casing 68 also comprises a cover plate 87 fixed to hollow bodies 69 and 81 by two screws 88, and which has four manifolds 89, each for receiving the gas supplied by the corresponding pair of electromagnets 22, 22'. Each manifold 89 communicates with a hole 91, in which to fix the fitting of connecting conduit 13 of the corresponding cylinder of engine 6; which fitting may also be calibrated to adapt the flow of solenoid valves 25 to the type of engine involved.

In the Figure 7 variation, as opposed to elastic bar 47 or 86, edge 42 of plate 33 of the armature of electromagnet 22 is held contacting the surface of edge 30 by a leaf spring 92 fixed in any known manner to guide plate 38 or 82, and contacting the surface 34 along a line L; in which case, rib 37 may be reduced in thickness or dispensed with, as shown in Figure 7.

The advantages, as compared with known feed devices, of the fuel gas feed device according to the invention will be clear from the foregoing description. In particular, the edge on the surface of armature plate 33 eliminates wear of the line of contact with edge 30, and reduces associated friction to achieve precise, highspeed operation of the solenoid valve. Moreover, any manufacturing and assembly tolerances of the component parts, in particular hollow bodies 16, 17 and 69, 81, have no effect on the length of the lever arm of shutter 32.

The increased length of the lever arm of force F of elastic bar 47, 86 also eliminates the need for additional return springs, thus simplifying manufacture of the feed device. Using more than one electromagnet 22, 22' to control corresponding nozzles 48, 48' for supplying each cylinder of engine 6 provides for greater flexibility in the operation of engine 6, and employing replaceable nozzles 48, 48' greatly increases the working life of the feed device. Finally, the common feed device in Figures 5 and 6 also provides for a high degree of compactness, and greatly reduces the manufacturing cost of the device.

Clearly, changes may be made to the feed devices as described herein without, however, departing from the scope of the accompanying Claims. For example, changes may be made to the form of the solenoid valve and relative armature plate 33; and leaf spring 92 may be replaced with a coil spring.

Feed device 12 may be modular in design to obtain a feed unit comprising a variable number of connected modules; and the ends of inlet and outlet conduits 19, 66 and 78, 91 may be designed to connection to the respective conduits in any known manner.

In the Figure 5 and 6 variation, the single rib 83 of plate 82 may be replaced with rib segments associated with one or more plates 33, so as to form separate seats 84 for corresponding elastic bars 86. And, in the case of separate solenoid valves 15 for respective engine cylinders, these may be fixed directly to intake conduits 7 by straightforward fittings, with no need for connecting conduits 13.

The solenoid valve of each engine cylinder may also be provided with more than two electromagnets, which may be housed and arranged in any manner in casing 20. In the common feed device, solenoid valves 15 and/or electromagnets 22, 22' may be arranged in two or more rows. And, finally, the solenoid valves described may be used for also feeding fuel (LPG, methane, etc.) in the liquid state.

## Claims

1. A fuel gas feed device for an internal combustion engine, comprising at least one solenoid valve (15) controlled to feed gas to a corresponding cylinder of the engine; said solenoid valve (15) comprising an inlet conduit (19, 74) and at least one outlet conduit (31, 48; 31, 48') for said fuel gas; a corresponding shutter (32) carried by an armature (33) being activated by a corresponding electromagnet (22, 22') to connect said inlet conduit (19, 74) to said outlet conduit (31, 48; 31, 48'); said armature being defined by an oblong plate (33) rotating about an edge (42) located between a first surface (44) and an inclined portion (43) of said plate (33), and contacting a flat surface (30) of said fixed member (26); and an elastic member (47, 86, 92) acting on said plate (33) with a predetermined elastic force (F) sufficient to normally keep said shutter (32) in a closed position closing said outlet conduit (31, 48; 31, 48'); **characterized in that** said shutter (32) projects form a second flat surface (34) of said plate (33), opposite said first surface (44); said elastic member (47, 86, 92) acting on said second surface (34) at said inclined portion (43) along a line (L) parallel to said edge (42) as to form a predetermined lever arm.

2. A feed device as claimed in Claim 1, **characterized in that** said elastic member is defined by a bar (47, 86) of elastic material.

3. A feed device as claimed in Claim 1, **characterized in that** said elastic member is defined by a leaf spring (92).

4. A feed device as claimed in Claim 2 or 3, **characterized in that** said shutter is in the form of a disk (32); said parallel line (L) forming with said edge (42) a lever arm equal to at least a tenth of the lever arm formed by said disk (32).

5. A feed device as claimed in Claim 4, **characterized in that** said inclined portion (43) forms with said first surface (44) an angle (α) of less than 20°; said edge (42) being rounded with a radius (R) at least equal to the lever arm of said parallel line (L).

6. A feed device as claimed in Claim 5, **characterized in that**, in use, said first surface (44) forms with said flat surface (30) an angle (β) substantially equal to that formed by said inclined portion (43) with said flat surface (30).

7. A feed device as claimed in one of the foregoing Claims, **characterized in that** said solenoid valve (15) is housed in a casing (20, 68) comprising two hollow bodies (16, 17; 69, 81) connected to each other in gastight manner along a plane (P) perpendicular to said outlet conduit (31, 48; 31, 48'); a first of said hollow bodies (16, 69) having said inlet conduit (19, 74) and housing said electromagnet (22, 22'); and said flat surface (30) of said fixed member (26) being parallel to said plane (P).

8. A feed device as claimed in Claim 7, wherein said electromagnet (22, 22') comprises a magnetic core (23); **characterized in that** a second of said hollow bodies (17, 81) has said outlet conduit (31, 48; 31, 48'), and houses said armature (33); said fixed member (26) being carried by said magnetic core (23).

9. A feed device as claimed in Claim 7 or 8, **characterized in that** said outlet conduit (31, 48; 31, 48') comprises a calibrated nozzle (48, 48') fitted removably inside a seat (49) in said second hollow body (17, 81).

10. A feed device as claimed in Claim 9, **characterized in that** the plate (33) of said armature is carried by a guide plate (38, 82) fixed to said second hollow body (17, 81); said nozzle (48, 48') having a portion inserted in gastight manner inside a corresponding hole (39) in said guide plate (38, 82); and said elastic bar (47, 86) being housed in a seat formed between said second hollow body (17, 81) and said guide plate (38, 82).

11. A feed device as claimed in one of Claims 7 to to 10, **characterized in that** said solenoid valve (15) comprises at least two electromagnets (22, 22') for controlling two corresponding outlet conduits (31, 48; 31, 48') in said second hollow body (17, 81); said outlet conduits (31, 48; 31, 48') being substantially parallel.

12. A feed device as claimed in Claim 11, **characterized in that** another body (61, 83) is connected to said second hollow body (17, 81) in gastight manner; said other body (61, 83) having a manifold (62, 89) communicating with said outlet conduits (31, 48; 31, 48'); and said manifold (62, 89) also communicating with the corresponding cylinder of the engine (6).

13. A feed device as claimed in Claim 12, **characterized in that** said manifold (62, 89) has a calibrated fitting to adapt the flow of said solenoid valve (15) to the type of engine (6) involved.

14. A feed device as claimed in one of Claims 11 to 13, **characterized in that** said outlet conduits (31, 48; 31, 48') have nozzles (48, 48') of different inside diameters.

15. A feed device as claimed in one of Claims 11 to 14, **characterized in that** the plates (33) of said armatures are carried by a common guide plate (38, 82); each of said nozzles (48, 48') being inserted in gastight manner inside a corresponding seat (39) in said guide plate (38, 82).

16. A feed device as claimed in one of Claims 11 to 15, **characterized in that** said electromagnets (22, 22') are controlled selectively and in phase by corresponding modulated-width pulses (PWM) generated by an electronic control unit (14) on the basis of signals indicating operation of the engine (6).

17. A feed device as claimed in one of Claims 11 to 16, wherein each cylinder of the engine (6) has a corresponding intake conduit (7); **characterized in that** each of said solenoid valves (15) is fixed directly to said corresponding intake conduit (7).

18. A feed device as claimed in one of Claims 11 to 16, **characterized in that** each cylinder of the engine (6) has a solenoid valve (15); the solenoid valves (15) of at least two cylinders sharing said first hollow body (69) and said second hollow body (81).

19. A feed device as claimed in Claims 14 and 18, **characterized in that** the nozzles (48, 48') corresponding to said electromagnets (22, 22') are arranged in one row; said other body (87) being common to said solenoid valves (15), and having a manifold (89) for each of said solenoid valves (15).

20. A feed device as claimed in Claim 19, **characterized in that** said elastic bar (86) is associated with one or more plates (33) of the armatures of said electromagnets (22, 22').

21. A feed device as claimed in Claim 19, **characterized in that** said elastic bar (86) is common to the plates (33) of the armatures of said electromagnets (22, 22').

22. A feed device as claimed in Claim 16 and one of Claims 17 to 21, **characterized in that** said electromagnets (22, 22') of said solenoid valves (15) are controlled by said electronic unit sequentially and in phase with the operation of the corresponding cylinders of the engine.

## Patentansprüche

1. Gaszuführvorrichtung für eine Brennkraftmaschine mit
zumindest einem Magnetventil (15), das zur Zuführung von Gas in einen entsprechenden Zylinder der Kraftmaschine angesteuert wird;
wobei das Magnetventil (15) eine Zuführleitung (19, 74) und mindestens eine Austrittsleitung (31, 48; 31, 48') für das Brenngas aufweist;
einem entsprechenden Verschluss (32), der von einem Anker (33) getragen wird, der durch einen entsprechenden Elektromagnet (22, 22') zur Verbindung der Zuführleitung (19, 74) mit der Austrittsleitung (31,48; 31, 48') betätigt wird;
wobei der Anker durch eine längliche Platte (33) definiert ist, die über eine Kante (42) rotiert, die sich zwischen einer ersten Oberfläche (44) und einem schrägen Bereich (43) der Platte (33) befindet, und in Kontakt mit einer ebenen Oberfläche (30) des befestigten Bauteils (26) tritt; und
einem elastischen Bauteil (47, 86, 92), das mit einer bestimmten elastischen Kraft (F) auf die Platte (33) einwirkt, die ausreicht, um den Verschluss (32) normalerweise in einer geschlossenen Stellung, in der die Austrittsleitung (31, 48; 31, 48') geschlossen ist, zu halten,
**dadurch gekennzeichnet, dass**
der Verschluss (32) aus einer zweiten ebenen Oberfläche (34) der Platte (33) gegenüber der ersten Oberfläche (44) herausragt, wobei das elastische Bauteil (47, 86, 92) auf die zweite Oberfläche (34) am schrägen Bereich (43) entlang einer Linie (L) parallel zu der Kante (42) einwirkt, um einen vorgegebenen Hebelarm zu bilden.

2. Zuführvorrichtung nach Anspruch 1, **dadurch gekennzeichnet, dass** das elastische Bauteil durch eine Stange (47, 86) aus elastischem Material definiert ist.

3. Zuführvorrichtung nach Anspruch 1, **dadurch gekennzeichnet, dass** das elastische Bauteil durch eine Blattfeder (92) definiert ist.

4. Zuführvorrichtung nach Anspruch 2 oder 3, **dadurch gekennzeichnet, dass** der Verschluss die Form einer Scheibe (32) hat, wobei die parallele Linie (L) mit der Kante (42) einen Hebelarm bildet, der mindestens einem Zehntel des durch die Scheibe (32) gebildeten Hebelarms entspricht.

5. Zuführvorrichtung nach Anspruch 4, **dadurch gekennzeichnet, dass** der schräge Bereich (43) mit der ersten Oberfläche (44) einen Winkel (α) bildet, der weniger als 20° hat, wobei die Kante (42) mit einem Radius (R) abgerundet und mindestens gleich dem Hebelarm der parallelen Linie (L) ist.

6. Zuführvorrichtung nach Anspruch 5, **dadurch gekennzeichnet, dass** bei Betrieb die erste Oberfläche (44) mit der ebenen Oberfläche (30) einen Winkel (β) bildet, der im Wesentlichen gleich dem Winkel ist, der von dem schrägen Bereich (43) und der ebenen Oberfläche (30) gebildet wird.

7. Zuführvorrichtung nach einem der vorangehenden Ansprüche, **dadurch gekennzeichnet, dass** das Magnetventil (15) in einem Gehäuse (20, 68) untergebracht ist, das zwei Hohlkörper umfasst (16, 17; 69, 81), die entlang einer Ebene (P) senkrecht zu der Austrittsleitung (31, 48; 31, 48') gasdicht miteinander verbunden sind, wobei der erste Hohlkörper (16, 69) die Zuführleitung (19, 74) aufweist und den Elektromagnet (22, 22') aufnimmt, und wobei die ebene Fläche (30) des befestigten Bauteils (26) parallel zur Ebene (P) ist.

8. Zuführvorrichtung nach Anspruch 7, wobei der Elektromagnet (22, 22') einen Magnetkern (23) hat, **dadurch gekennzeichnet, dass** der zweite Hohlkörper (17, 81) die Austrittsleitung (31, 48; 31, 48') aufweist und den Anker (33) aufnimmt, wobei das befestigte Bauteil (26) von dem Magnetkern (23) getragen wird.

9. Zuführvorrichtung nach Anspruch 7 oder 8, **dadurch gekennzeichnet, dass** die Austrittsleitung (31, 48; 31, 48') eine kalibrierte Düse (48, 48') umfasst, die innerhalb einer Aufnahme (49) im zweiten Hohlkörper (17, 81) herausnehmbar eingesetzt ist.

10. Zuführvorrichtung nach Anspruch 9, **dadurch gekennzeichnet, dass** die Platte (33) des Ankers von einer Führungsplatte (38, 82) getragen wird, die am zweiten Hohlkörper (17, 81) befestigt ist, wobei die Düse (48, 48') einen Abschnitt hat, der gasdicht in eine entsprechende Bohrung (39) in der Führungsplatte (38, 82) eingebracht ist, und wobei die elastische Stange (47, 86) in einer Aufnahme untergebracht ist, die zwischen dem zweiten Hohlkörper (17, 81) und der Führungsplatte (38, 82) ausgebildet ist.

11. Zuführvorrichtung nach einem der Ansprüche 7 bis 10, **dadurch gekennzeichnet, dass** das Magnetventil (15) mindestens zwei Elektromagnete (22, 22') zur Steuerung der entsprechenden Austrittsleitungen (31, 48; 31, 48') in dem zweiten Hohlkörper (17, 81) umfasst, wobei die Austrittsleitungen (31, 48; 31, 48') im Wesentlichen parallel sind.

12. Zuführvorrichtung nach Anspruch 11, **dadurch gekennzeichnet, dass** ein anderer Körper (61, 83) mit dem zweiten Hohlkörper (17, 81) gasdicht verbunden ist, wobei der andere Körper (61, 83) einen Krümmer (62, 89) hat, der mit den Austrittsleitungen (31, 48; 31, 48') in Verbindung steht, und wobei der Krümmer (62, 89) auch mit den entsprechenden Zylindern der Kraftmaschine (6) in Verbindung steht.

13. Zuführvorrichtung nach Anspruch 12, **dadurch gekennzeichnet, dass** der Krümmer (62, 89) ein kalibriertes Anschlussstück zur Anpassung der Strömung vom Magnetventil (15) zu dem eingesetzten Typ Kraftmaschine (6) hat.

14. Zuführvorrichtung nach einem der Ansprüche 11 bis 13, **dadurch gekennzeichnet, dass** die Austrittsleitungen (31, 48; 31, 48') Düsen (48, 48') mit verschiedenen Innendurchmessern haben.

15. Zuführvorrichtung nach einem der Ansprüche 11 bis 14, **dadurch gekennzeichnet, dass** die Platten (33) der Anker von einer gemeinsamen Führungsplatte (38, 82) getragen werden, wobei jede der Düsen (48, 48') gasdicht in eine entsprechende Aufnahme (39) in der Führungsplatte (38, 82) eingebracht ist.

16. Zuführvorrichtung nach einem der Ansprüche 11 bis 15, **dadurch gekennzeichnet, dass** die Elektromagnete (22, 22') wahlweise und in Phase durch entsprechende Pulse mit modulierter Breite (PWM) gesteuert werden, die von einer elektronischen Steuereinheit (14) aufgrund von Signalen, die den Betrieb der Kraftmaschine anzeigen, erzeugt werden.

17. Zuführvorrichtung nach einem der Ansprüche 11 bis 16, wobei jeder Zylinder der Kraftmaschine (6) eine entsprechende Ansaugleitung (7) hat, **dadurch gekennzeichnet, dass** jedes der Magnetventile (15) direkt an der entsprechenden Ansaugleitung (7) befestigt ist.

18. Zuführvorrichtung nach einem der Ansprüche 11 bis 16, **dadurch gekennzeichnet, dass** jeder Zylinder der Kraftmaschine (6) ein Magnetventil (15) hat, wobei sich die Magnetventile (15) von mindestens zwei Zylindern den ersten Hohlkörper (69) und den zweiten Hohlkörper (81) teilen.

19. Zuführvorrichtung nach den Ansprüchen 14 und 18, **dadurch gekennzeichnet, dass** die den Elektromagnete (22, 22') entsprechenden Düsen (48, 48') in einer Reihe angeordnet sind, wobei der andere Körper (87) den Magnetventilen (15) gemeinsam ist und einen Krümmer (89) für jedes der Magnetventile (15) hat.

20. Zuführvorrichtung nach Anspruch 19, **dadurch gekennzeichnet, dass** die elastische Stange (86) mit einer oder mehreren Platten (33) der Anker der Elektromagnete (22, 22') verbunden ist.

21. Zuführvorrichtung nach Anspruch 19, **dadurch gekennzeichnet, dass** die elastische Stange (86) den Platten (33) der Anker der Elektromagnete (22, 22') gemeinsam ist.

22. Zuführvorrichtung nach Anspruch 16 und einem der Ansprüche 17 bis 21, **dadurch gekennzeichnet, dass** die Elektromagnete (22, 22') der Magnetventile (15) nacheinander und in Phase mit dem Betrieb der entsprechenden Zylinder der Kraftmaschine durch die elektronische Einheit gesteuert werden.

## Revendications

1. dispositif d'alimentation en gaz combustible pour un moteur à combustion interne, comportant au moins une électrovalve (15) commandée pour alimenter en gaz un cylindre correspondant du moteur ; ladite électrovalve (15) comportant un conduit d'entrée (19, 74) et au moins un conduit de sortie (31, 48 ; 31, 48') pour ledit gaz combustible ; un obturateur correspondant (32) porté par une armature (33) étant activé par un électroaimant correspondant (22, 22') pour raccorder ledit conduit d'entrée (19, 74) audit conduit de sortie (31, 48 ; 31, 48') ; ladite armature étant définie par une plaque oblongue (33) tournant autour d'un bord (42) placé entre une première surface (44) et une partie inclinée (43) de ladite plaque (33), et en contact avec une surface plate (30) dudit élément fixe (26) ; et un élément élastique (47, 86, 92) agissant sur ladite plaque (33) sous une force élastique prédéterminée (F) suffisante pour maintenir normalement ledit obturateur (32) dans une position fermée fermant ledit conduit de sortie (31, 48 ; 31, 48') ; **caractérisé en ce que** ledit obturateur (32) fait saillie d'une seconde surface plate (34) de ladite plaque (33), opposée à ladite première surface (44) ; ledit élément élastique (47, 86, 92) agissant sur ladite seconde surface (34) au niveau de ladite partie inclinée (43) suivant une ligne (L) parallèle audit bord (42) afin de former un bras de levier prédéterminé.

2. Dispositif d'alimentation selon la revendication 1, **caractérisé en ce que** ledit élément élastique est défini par une barre (47, 86) en matière élastique.

3. Dispositif d'alimentation selon la revendication 1, **caractérisé en ce que** ledit élément élastique est défini par un ressort plat (92).

4. Dispositif d'alimentation selon la revendication 2 ou 3, **caractérisé en ce que** ledit obturateur se présente sous la forme d'un disque (32), ladite ligne parallèle (L) formant avec ledit bord (42) un bras de levier égal à au moins un dixième du bras de levier formé par ledit disque (32).

5. Dispositif d'alimentation selon la revendication 4, **caractérisé en ce que** ladite partie inclinée (43) forme avec ladite première surface (44) un angle (α) de moins de 20° ; ledit bord (42) étant arrondi suivant un rayon (R) au moins égal au bras de levier de ladite ligne parallèle (L).

6. Dispositif d'alimentation selon la revendication 5, **caractérisé en ce que**, lors de l'utilisation, ladite première surface (44) forme avec ladite surface plate (30) un angle (β) sensiblement égal à celui formé par ladite partie inclinée (43) avec ladite surface plate (30).

7. Dispositif d'alimentation selon l'une des revendications précédentes, **caractérisé en ce que** ladite électrovalve (15) est logée dans un boîtier (20, 68) comportant deux corps creux (16, 17 ; 69, 81) reliés entre eux d'une manière étanche au gaz suivant un plan (P) perpendiculaire audit conduit de sortie (31, 48 ; 31, 48') ; un premier desdits corps creux (16, 69) ayant ledit conduit d'entrée (19, 74) et logeant ledit électroaimant (22, 22'), et ladite surface plate (30) dudit élément fixe (26) étant parallèle audit plan (P).

8. Dispositif d'alimentation selon la revendication 7, dans lequel ledit électroaimant (22, 22') comporte un noyau magnétique (23) ; **caractérisé en ce qu'**un second desdits corps creux (17, 81) comporte ledit conduit de sortie (31, 48 ; 31, 48') et loge ladite armature (33), ledit élément fixe (26) étant porté par ledit noyau magnétique (23).

9. Dispositif d'alimentation selon la revendication 7 ou 8, **caractérisé en ce que** ledit conduit de sortie (31, 48 ; 31, 48') comporte une buse calibrée (48, 48') montée de façon amovible à l'intérieur d'un siège (49) dans ledit second corps creux (17, 81).

10. Dispositif d'alimentation selon la revendication 9, **caractérisé en ce que** la plaque (33) de ladite armature est portée par une plaque de guidage (38, 82) fixée audit second corps creux (17, 81), ladite buse (48, 48') ayant une partie insérée d'une manière étanche au gaz à l'intérieur d'un trou correspondant (39) dans ladite plaque de guidage (38, 82), et ladite barre élastique (47, 86) étant logée dans un siège entre ledit second corps creux (17, 81) et ladite plaque de guidage (38, 82).

11. Dispositif d'alimentation selon l'une des revendications 7 à 10, **caractérisé en ce que** ladite électrovalve (15) comporte au moins deux électroaimants (22, 22') pour commander deux conduits de sortie correspondants (31, 48 ; 31, 48') dans ledit second corps creux (17, 81), lesdits conduits de sortie (31, 48 ; 31, 48') étant sensiblement parallèles.

12. Dispositif d'alimentation selon la revendication 11, **caractérisé en ce qu'**un autre corps (61, 83) est relié audit second corps creux (17, 81) d'une manière étanche au gaz, ledit autre corps (61, 83) ayant un collecteur (62, 89) communiquant avec lesdits conduits de sortie (31, 48 ; 31, 48'), et ledit collecteur (62, 89) communiquant aussi avec le cylindre correspondant du moteur (6).

13. Dispositif d'alimentation selon la revendication 12, **caractérisé en ce que** ledit collecteur (62, 89) comporte un ajutage calibré pour adapter l'écoulement de ladite électrovalve (15) au type du moteur (6) concerné.

14. Dispositif d'alimentation selon l'une des revendications 11 à 13, **caractérisé en ce que** lesdits conduits de sortie (31, 48 ; 31, 48') comporte des buses (48, 48') de différents diamètres intérieurs.

15. Dispositif d'alimentation selon l'une des revendications 11 à 14, **caractérisé en ce que** les plaques (33) desdites armatures sont portées par une plaque commune (38, 82) de guidage, chacune desdites buses (48, 48') étant insérée d'une manière étanche au gaz à l'intérieur du siège correspondant (39) dans ladite plaque (38, 82) de guidage.

16. Dispositif d'alimentation selon l'une des revendications 11 à 15, **caractérisé en ce que** lesdits électroaimants (22, 22') sont commandés sélectivement et en phase par des impulsions correspondantes modulées en largeur (PWM) générées par une unité de commande électronique (14) sur la base de signaux indiquant le fonctionnement du moteur (6).

17. Dispositif d'alimentation selon l'une des revendications 11 à 16, dans lequel chaque cylindre du moteur (6) comporte un conduit d'admission correspondant (7) ; **caractérisé en ce que** chacune desdites électrovalves (15) est fixée directement audit conduit d'admission correspondant (7).

18. Dispositif d'alimentation selon l'une des revendications 11 à 16, **caractérisé en ce que** chaque cylindre du moteur (6) comporte une électrovalve (15), les électrovalves (15) d'au moins deux cylindres se partageant ledit premier corps creux (69) et ledit second corps creux (81).

19. Dispositif d'alimentation selon les revendications 14 et 18, **caractérisé en ce que** les buses (48, 48') correspondant auxdits électroaimants (22, 22') sont agencés en une rangée, ledit autre corps (87) étant commun auxdites électrovalves (15) et ayant un collecteur (89) pour chacune desdites électrovalves (15).

20. Dispositif d'alimentation selon la revendication 19, **caractérisé en ce que** ladite barre élastique (86) est associée à une ou plusieurs plaques (33) des armatures desdits électroaimants (22, 22').

21. Dispositif d'alimentation selon la revendication 19, **caractérisé en ce que** ladite barre élastique (86) est commune aux plaques (33) des armatures desdits électroaimants (22, 22').

22. Dispositif d'alimentation selon la revendication 16 et l'une des revendications 17 à 21, **caractérisé en ce que** lesdits électroaimants (22, 22') desdites électrovalves (15) sont commandés par ladite unité électronique séquentiellement et en phase avec le fonctionnement des cylindres correspondants du moteur.
